# EUROPÄISCHE PATENTSCHRIFT

(11) **EP 2 548 482 B1**
(45) Veröffentlichungstag und Bekanntmachung des Hinweises auf die Patenterteilung: **12.03.2014**
(21) Anmeldenummer: 12175566.4
(22) Anmeldetag: 09.07.2012
(51) Int. Cl.: A47J 31/44

(54) **Getränkeautomat**
Beverage machine
Automate à boissons

(30) Priorität: 21.07.2011 DE 102011079594
(43) Veröffentlichungstag der Anmeldung: 23.01.2013
(73) Patentinhaber: BSH Bosch und Siemens Hausgeräte GmbH, 81739 München (DE)
(72) Erfinder: Ostermaier, Albert, 83371 Stein a.d. Traun (DE)

(56) Entgegenhaltungen:
- EP-A1- 1 676 509
- DE-U- 7 120 645
- DE-U1-202008 016 845

## Beschreibung

Die vorliegende Erfindung betrifft einen Getränkeautomaten, insbesondere einen Kaffeeautomaten, mit einem höhenverstellbaren Getränkeauslauf.

Ein Getränkeautomat mit einem höhenverstellbaren Auslauf ist beispielsweise aus der DE 20 2008 016 845 U1 und der EP 1 676 509 A1 bekannt.

Nachteilig an dem vorstehend genannten Getränkeautomaten den DE 20 2008 016845 U1 ist, dass die Höhenverstellung über ein manuelles vertikales Verschieben des Auslaufs erfolgt. Die Qualität des Verschiebens, d.h. die aufzuwendende Kraft ist dabei vom Spiel zwischen dem Buchsen- und dem Führungselement und von den auf das Buchsenelement wirkenden Hebelkräften abhängig. Wird von einer Bedienperson der Auslauf nicht bzw. nicht annähernd vertikal bewegt, kann die Führung verkannten, wodurch ein weiteres Verschieben verhindert wird.

Der vorliegenden Erfindung liegt daher die Aufgabe zugrunde eine für einen Getränkeautomaten der gattungsgemäßen Art verbesserte, zumindest alternative Ausführungsform anzugeben.

Diese Aufgabe wird erfindungsgemäß durch den Gegenstand des unabhängigen Patentanspruchs 1 gelöst. Vorteilhafte Ausführungsformen sind Gegenstand der abhängigen Ansprüche.

Die Erfindung beruht auf dem allgemeinen Gedanken, bei einem Getränkeautomaten ein drehbar gelagertes, mit einem Gewinde versehenes Führungselement auszubilden, an dem ein höhenverstellbarer Getränkeauslauf über ein Buchsenelement geführt ist, wobei ein am Buchsenelement angeordneter Mitnehmer gegen das Führungselement vorgespannt ist.

Durch die erfindungsgemäße Kombination von einem Führungselement mit Gewinde und einem an einem Buchsenelement angeordneten Mitnehmer der gegen das Führungselement vorgespannt ist, ist es möglich, die Höhenverstellung des Kaffeeauslaufs über eine Drehung des Führungselements zu erreichen. Die Drehung des Führungselements erfolgt motorisch.

Erfindungsgemäß wird das als Gewindestange ausgebildete Führungselement elektromotorisch angetrieben. Dies hat den Vorteil, dass nach der An- bzw. Auswahl eines bestimmten Getränks eine Steuereinheit des Getränkeautomaten, beispielsweise einen µController, den Getränkeauslauf automatisiert in das richtige Höhenniveau verfährt. So muss beispielsweise bei der Auswahl eines Mischgetränks, aufgrund des größeren Volumens, der Getränkeauslauf an einem oberen Ende des Führungselements, und bei der Auswahl eines Kaffees, insbesondere eines Espressos, um Spritzer zu vermeiden, am unteren Ende des Führungselements positioniert sein. Zudem kann über einen motorischen Antrieb des Führungselements der Getränkeauslauf indirekt, beispielsweise auf Knopfdruck einer Bedienperson hin verfahren werden, wodurch das eingangs genannte Verkanten vermieden wird.

Da der verbaubare Raum im vorderen Frontbereich eines Getränkeautomaten begrenzt ist, ist der Elektromotor im Inneren der Gewindestange verbaut. Ein an einer axial angeordneten Welle des Elektromotors vorgesehenes Zahnrad steht dabei mit einem am Innenumfang der Gewindestange vorgesehenen Zahnkranz in Eingriff. Falls nötig können Kraft und Drehmoment über ein im Inneren oder außerhalb der Gewindestange vorgesehenes Getriebe verändert bzw. angepasst werden.

Erfindungsgemäß ist der Mitnehmer zumindest bereichsweise, beispielsweise von einer Feder, gegen das Führungselement vorgespannt.

Dadurch wird zum einen erreicht, dass neben der Höhenverstellung des Kaffeeauslaufs über die Drehung des mit einem Gewindegang versehenen Führungselements auch eine Höhenverstellung durch ein, gegebenenfalls manuelles vertikales Verschieben des Auslaufs möglich ist. Der Gewindegang dient dabei als Rastung zwischen einer Vielzahl von möglichen Höhenniveaus.

Zum anderen kann eine aufwendige Ansteuerung des elektromotorischen Antriebs umgangen werden, indem am jeweiligen Ende des Verschiebeweges der Mitnehmer über einen am Ende speziell ausgebildeten Gewindegang rutscht, dergestalt, dass ein Leerlauf entsteht. Der speziell ausgebildete Gewindegang kann beispielsweise durch einen Gang ohne Steigung oder durch einen von einer bestimmten Tiefe auf null auslaufenden Gang gebildet sein.

Alternativ kann der Mitnehmer auch als eine Art Bürste mit einer Vielzahl von gegen das Führungselement vorgespannten elastischen Borsten ausgebildet sein.

Der Mitnehmer, ist bevorzugt aus Kunststoff und insbesondere als Kunststoffspritzgussteil, hergestellt. Als vorteilhaft erweist sich die Verwendung von gleitfähigen Kunststoffen oder aber eine Beschichtung des Mitnehmers oder des Führungselements mit einem gleitfähigen Material, beispielsweise Teflon.

Weitere wichtige Merkmale und Vorteile der Erfindung ergeben sich aus den Unteransprüchen, aus den Zeichnungen und aus der zugehörigen Figuranbeschreibung anhand der Zeichnungen.

Ein bevorzugtes Ausführungsbeispiel der Erfindung ist in den Zeichnungen dargestellt und wird In der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen höhenverstellbaren Getränkeauslauf und
- Fig. 2: eine Ansicht auf einen erfindungsgemäßen Mitnehmer.

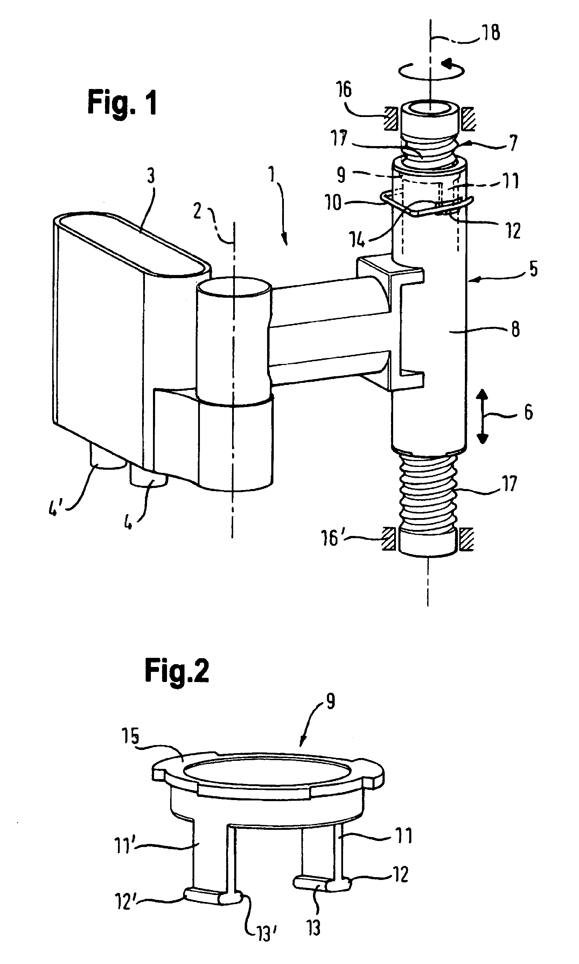

Entsprechend der Fig. 1, weist ein höhenverstellbarer Getränkeauslauf 1 einen um eine Hochachse 2 schwenkbaren Auslaufarm 3 mit zwei Auslaufstellen 4 und 4' auf.

Der Auslaufarm 3 ist dabei über die Hochachse 2 schwenkbar an einem Komponententräger 5 gelagert, welcher entlang dem Doppelpfeil 6 höhenverstellbar an einem nicht gezeigten Getränkeautomaten, insbesondere an einem Kaffeevollautomaten, gelagert ist. An diesem Getränkeautomaten ist ein ortsfest drehbar gelagertes Führungselement 7 vorgesehen, welches, beispielsweise als Gewindestange mit Außengewinde 17 ausgebildet ist, und auf welchem der höhenverstellbare Getränkeauslauf 1, respektive der Komponententräger 5 mit dem daran schwenkbar gelagerten Auslaufarm 3 über ein Buchsenelement 8 geführt ist. Das Buchsenelement 8 ist dabei Bestandteil des Komponententrägers 5.

Erfindungsgemäß ist am Buchsenelement 8 ein Mitnehmer 9 angeordnet, der zumindest bereichsweise von einer Feder 10 gegen das Führungselement 7 vorgespannt ist. Der Mitnehmer 9 weist einen Kragen 16 auf (vgl. Figur 2), über welchen er an einem Längsenden des Buchsenelementes 8 anliegt. Der Kragen 14 bildet demgemäß einen Anschlag beim längsseitigen Einschieben des Mitnehmers 9 in das Buchsenelement 8. Gemäß der Fig. 1 ist das Buchsenelement 8 des Komponententrägers 5 im Bereich des Mitnehmers 9 transparent gezeichnet, um die Lage des Mitnehmers 9 im Buchsenelement 8 besser darstellen zu können.

Betrachtet man Fig. 2, so erkennt man, dass der Mitnehmer 9 ringförmig ausgebildet ist und zumindest zwei sich in Axialrichtung erstreckende Axialschenkel 11 und 11' aufweist, an deren freien Enden jeweils ein nach außen und ein nach innen gerichteter Rasthaken 12, 12' bzw. 13, 13' angeordnet ist. Die nach außen gerichteten Rasthaken 12, 12' greifen in jeweils eine zugehörige, sich in Umfangsrichtung erstreckende, Rastöffnung 14 am Buchsenelement 8 ein und fixieren dadurch den Mitnehmer 9 am Buchsenelement 8.

Die nach innen gerichteten, mittels der Feder 10 federkraftbeaufschlagten Rasthaken 13, 13' stehen mit dem Gewinde des Führungselements 7 in Eingriff. Dieser federkraftbeaufschlagte Eingriff ist durch eine vertikal auf den Auslaufarm 3 wirkende Kraft lösbar, dergestalt, dass der Gewindegang 17 als Rastung zwischen einer Vielzahl von möglichen Höhenniveaus dient.

Die Feder 10 ist vorzugsweise U-förmig oder C-förmig ausgebildet und spannt mit ihren Federschenkeln die Axialschenkel 12, 12' des Mitnehmers 9 im Bereich der Rastöffnungen 14 gegen das Führungselement 7 vor. Der Mitnehmer 9 ist dabei vorzugsweise aus Kunststoff, insbesondere als Kunststoffspritzgussteil, hergestellt und ermöglicht dadurch eine einerseits kostengünstige Herstellung und andererseits eine nahezu frei wählbare Beeinflussung der Kunststoffeigenschaften.

Das über ein unteres und ein oberes Lager 16, 16' ortsfest drehbar gelagerte Führungselement 7 kann motorisch um die Rotationsachse 18 gedreht werden.

Die Erfindung eignet sich insbesondere für Getränkeautomaten mit einer direkten und einer indirekten Höhenverstellung des Getränkeauslaufs. So lässt sich der Auslauf motorisch, gesteuert von einer Steuereinheit des Getränkeautomaten höhenverstellen.

### Bezugszeichenliste

- 1: Getränkeauslauf
- 2: Hochachse
- 3: Auslaufarm
- 4: Auslaufstelle
- 5: Komponententräger
- 6: Verschieberichtung
- 7: Führungselement
- 8: Buchsenelement
- 9: Mitnehmer
- 10: Feder
- 11: Axialschenkel
- 12: Rasthaken
- 13: Rasthaken
- 14: Rastöffnung
- 15: Kragen
- 16: Lager
- 17: Gewinde(gang)
- 18: Rotationsachse

## Patentansprüche

1. Getränkeautomat, Insbesondere ein Kaffeevollautomat mit einem höhenverstellbaren Getränkeauslauf (1) und einem am Getränkeautomaten ausgebildeten Führungselement (7) an dem der höhenverstellbare Getränkeauslauf (1) über ein Buchsenelement (8) geführt ist, wobei ein am Buchsenelement angeordneter Mitnehmer (9) gegen das Führungselement vorgespannt ist wobei das Führungselement drehbar ausgebildet und mit einem Gewinde (17) versehen ist, und wobei das Führungselement (7) elektromotorisch mittels eines im Inneren der Gewindestange verbauten Elektromotors gedreht wird.

2. Getränkeautomat nach Anspruch 1, **dadurch gekennzeichnet, dass** das Führungselement (7) als Gewindestange ausgebildet ist.

3. Getränkeautomat nach einem der vorstehenden Ansprüchen, **dadurch gekennzeichnet, dass** der Mitnehmer (9) ringförmig ausgebildet ist und zumindest zwei Axialschenkel (11,11') aufweist, an deren freien Enden jeweils ein nach außen gerichteter Rasthaken (12,12') angeordnet ist, der in jeweils eine zugehörige, sich in Umfangsrichtung erstreckende, Rastöffnung (14) am Buchsenelement (8) eingreift und dadurch den Mitnehmer (9) am Buchsenelement (8) fixieren.

4. Getränkeautomat nach Anspruch 3, **dadurch gekennzeichnet, dass** an den freien Enden der zumindest zwei Axialschenkel (11, 11'), jeweils ein nach außen und ein nach innen gerichteter Rasthaken (12,12' bzw. 13, 13') angeordnet ist.

5. Getränkeautomat nach einem der Ansprüche 1 bis 4, **dadurch gekennzeichnet, dass** der Mitnehmer (9) aus Kunststoff ausgebildet ist.

6. Getränkeautomat nach einem der Ansprüche 1 bis 5, **dadurch gekennzeichnet, dass** das Führungselement (7) aus Kunststoff und das Buchsenelement (8) aus Metall ausgebildet sind.

7. Getränkeautomat nach einem der Ansprüche 1 bis 6, **dadurch gekennzeichnet, dass** der Mitnehmer (9) einen Kragen (15) aufweist, über welchen er an einem Längsende des Buchsenelementes (8) anliegt.

## Claims

1. Automatic beverage machine, in particular a fully automatic coffee machine, having a height-adjustable beverage outlet (1) and a guide element (7) configured on the automatic beverage machine, at which the height-adjustable beverage outlet (1) is guided by way of a bush element (8), a carrier (9) disposed on the bush element being pretensioned against the guide element, wherein the guide element is configured as rotatable and is provided with a thread (17) and wherein the guide element (7) is rotated electromotively by means of an electric motor incorporated in the interior of the threaded rod.

2. Automatic beverage machine according to claim 1, **characterised in that** the guide element (7) is configured as a threaded rod.

3. Automatic beverage machine according to one of the preceding claims, **characterised in that** the carrier (9) is configured as annular and has at least two axial limbs (11, 11'), on each of the free ends of which an outwards pointing latching hook (12, 12') is disposed, which engages in a respectively associated latching opening (14) extending in a peripheral direction on the bush element (8), thereby fixing the carrier (9) to the bush element (8).

4. Automatic beverage machine according to claim 3, **characterised in that** an outwards pointing and an inwards pointing latching hook (12, 12' and 13, 13') are disposed respectively on the free ends of the at least two axial limbs (11, 11').

5. Automatic beverage machine according to one of claims 1 to 4, **characterised in that** the carrier (9) is configured from plastic.

6. Automatic beverage machine according to one of claims 1 to 5, **characterised in that** the guide element (7) is configured from plastic and the bush element (8) is configured from metal.

7. Automatic beverage machine according to one of claims 1 to 6, **characterised in that** the carrier (9) has a collar (15) by way of which it bears against a longitudinal end of the bush element (8).

## Revendications

1. Distributeur de boissons, notamment distributeur automatique de café, muni d'une sortie de boisson (1) réglable en hauteur et d'un élément de guidage (7) réalisé sur le distributeur de boissons, sur lequel élément de guidage la sortie de boisson réglable en hauteur est guidée par l'intermédiaire d'un élément à douille (8), un entraîneur (9) disposé sur l'élément à douille étant précontraint contre l'élément de guidage, l'élément de guidage étant réalisé de manière rotative et étant muni d'un filetage (17), et l'élément de guidage (7) étant mis en rotation de manière électromotrice au moyen d'un moteur électrique installé à l'intérieur de la tige filetée.

2. Distributeur de boissons selon la revendication 1, **caractérisé en ce que** l'élément de guidage (7) est réalisé comme tige filetée.

3. Distributeur de boissons selon l'une quelconque des revendications précédentes, **caractérisé en ce que** l'entraîneur (9) est réalisé de manière annulaire et présente au moins deux côtés axiaux (11, 11') sur les extrémités libres desquels est respectivement disposé un crochet d'enclenchement (12, 12') orienté vers l'extérieur, lequel a prise sur l'élément à douille (8) dans respectivement une ouverture d'enclenchement (4) correspondant s'étendant en sens circonférentiel sur l'élément à douille (8) et fixe ainsi l'entraîneur (9).

4. Distributeur de boissons selon la revendication 3, **caractérisé en ce que** sur les extrémités libres des au moins deux côtés axiaux (11, 11') sont respectivement disposés un crochet d'enclenchement (12, 12' resp. 13, 13') orienté vers l'extérieur et un orienté vers l'intérieur.

5. Distributeur de boissons selon l'une quelconque des revendications 1 à 4, **caractérisé en ce que** l'entraîneur (9) est réalisé en matière plastique.

6. Distributeur de boissons selon l'une quelconque des revendications 1 à 5, **caractérisé en ce que** l'élément de guidage (7) est réalisé en matière plastique et **en ce que** l'élément à douille (8) est réalisé en métal.

7. Distributeur de boissons selon l'une quelconque des revendications 1 à 6, **caractérisé en ce que** l'entraîneur (9) présente un collet (16) par l'intermédiaire duquel il est adjacent à une extrémité longitudinale de l'élément à douille (8).
